(19) Europäisches Patentamt
European Patent Office
Office européen des brevets

(11) EP 3 832 518 A1

(12) EUROPEAN PATENT APPLICATION

(43) Date of publication:
09.06.2021 Bulletin 2021/23

(21) Application number: 20199815.0

(22) Date of filing: 02.10.2020

(51) Int Cl.:
*G06F 40/111* (2020.01) *G06F 40/137* (2020.01)
*G06F 40/154* (2020.01) *G06F 40/211* (2020.01)
*G06F 17/11* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **05.12.2019 US 201916704970**

(71) Applicant: **FUJITSU LIMITED**
**Kanagawa 211-8588 (JP)**

(72) Inventors:
- **Bahrami, Mehdi**
  **Sunnyvale, CA California 94085 (US)**
- **Chen, Wei-Peng**
  **Sunnyvale, CA California 94085 (US)**

(74) Representative: **Hoffmann Eitle**
**Patent- und Rechtsanwälte PartmbB**
**Arabellastraße 30**
**81925 München (DE)**

(54) **GRAPH EQUATION MODELING FOR MATHEMATICAL EQUATION DECOMPOSITION AND AUTOMATED CODE GENERATION**

(57) A method of performing graph equation modeling. The method includes receiving an input of a mathematical equation from a user via a user interface. The method also includes using a processor, performing processing on the input of the mathematical equation to decompose the mathematical equation into a plurality of tokens to generate an equation graph corresponding to the mathematical equation. The method also includes automatically generating computer code for a user-specified computing language based on the equation graph. The method also includes causing the automatically generated computer code to be presented to the user via the user interface, the automatically generated computer code corresponding to the inputted mathematical equation defined in a computing environment.

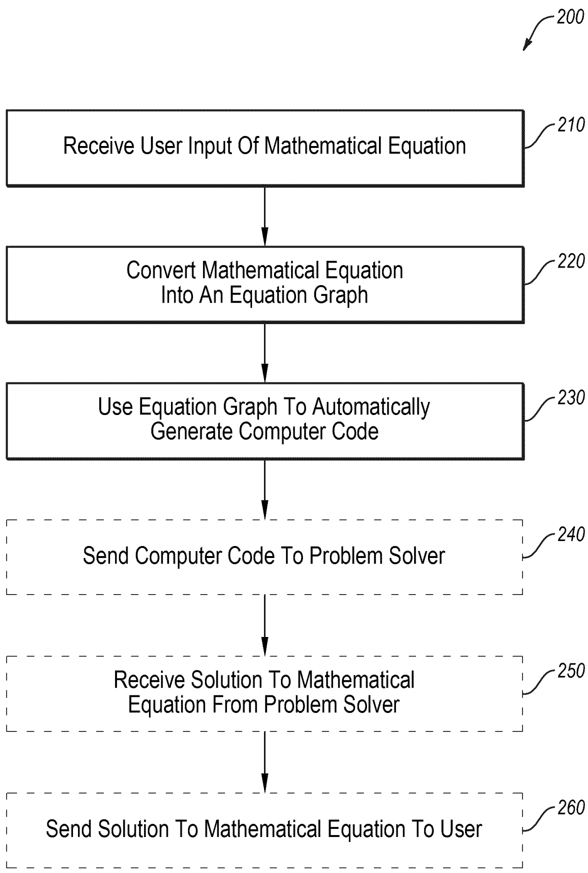


*FIG. 2*

EP 3 832 518 A1

Printed by Jouve, 75001 PARIS (FR)

## Description

## FIELD

The embodiments discussed in the present disclosure are related to methods and systems for performing graph equation modeling for mathematical equation decomposition and automated code generation in a computing device.

## BACKGROUND

Mathematic equations have been used for millennia as a notation for defining a problem statement. These problem statements are then used in a variety of different environments to assist in find a solution to the problem statement. While traditional mathematical solvers may be used to find these solutions, recent advances in computing technology have also resulted in computing devices which utilize powerful processing capabilities, including quantum annealers, digital annealers, and the like. One difficulty that users may have, however, is that a user needs to manually convert a mathematical equation into a programming language in order to use these computer solvers.

One difficulty with this requirement is that not all users understand or are capable of writing the code for the programming languages, and consequently, they may not be able to properly define their problems in the format required to have them solved. Further, there is not currently a computer interface solution that automatically generates programming code for a variety of problems collected from a variety of different sources. Rather, customers are required to define each problem based on their own (sometimes limited) knowledge of the various computer languages or using the limited resources and definitions that they may find from the Internet. This can lead to errors and limits on the number of problems that are currently being solved, despite the availability of powerful solvers. Further, manual problem conversion into computer code can be a labor-intensive process that requires extensive user time from skilled users.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

## SUMMARY

According to an aspect of an embodiment, a method of performing graph equation modeling. The method includes receiving an input of a mathematical equation from a user via a user interface. The method also includes using a processor, performing processing on the input of the mathematical equation to decompose the mathematical equation into a plurality of tokens to generate an equation graph corresponding to the mathematical equation. The method also includes automatically generating computer code for a user-specified computing language based on the equation graph. The method also includes causing the automatically generated computer code to be presented to the user via the user interface, the automatically generated computer code corresponding to the inputted mathematical equation defined in a computing environment.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

## BRIEF DESCRIPTION OF THE DRAWINGS

Example embodiments will be described and explained with additional specificity and detail through the use of the accompanying drawings in which:

FIG. 1 is a diagram representing an example environment related to performing graph equation modeling in accordance with some embodiments of the invention;

FIG. 2 is a block diagram illustrating a method of performing graph equation modeling according to some embodiments in accordance with some embodiments of the invention;

FIG. 3 is an example of a user interface which may be presented to the user in accordance with some embodiments of the invention;

FIGS. 4A and 4B are examples of user interface which may be presented to the user in accordance with some embodiments of the invention which includes a solution to an inputted equation;

FIG. 5 is a block diagram illustrating a method of performing mathematical equation processing according to some embodiments in accordance with some embodiments of the invention;

FIG. 6 is a block diagram illustrating a method of performing mathematical equation processing according to some embodiments in accordance with some embodiments of the invention;

FIG. 7 is an example of a token combining process which may be performed in association with the embodiments described herein;

FIG. 8 is an example of a series of decomposed tokens which may be identified in association with the embodiments described herein;

FIG. 9 is an example of a series of decomposed tokens which may linked together as a chain of tokens in association with the embodiments described herein;

FIG. 10 is a block diagram illustrating the various modules and components of a code generator according to one example;

FIG. 11 is an example of extracted parameters and variables which may be obtained by performing processing of an inputted mathematical equation;

FIG. 12 is an example of required input which may be inputted by a user to update a model of an equation graph;

FIGS. 13A and 13B are examples of extracted parameters and variables which may be obtained by performing processing of an inputted mathematical equation;

FIG. 14 is a model which may be generated based an inputted mathematical equation;

FIG. 15 illustrates an example of equation graph which may be generated based on an inputted mathematical equation;

FIG. 16 illustrates an example of a process of representing a vector according to some embodiments of the invention;

FIG. 17 is a flow chart illustrating various steps of some of the embodiments described herein as automated generated code is generated based on a mathematical equation inputted by the user;

FIG. 18 illustrates the ability for additional input to be added to the generated code according to some embodiments of the invention; and

FIG. 19 an example computing system capable of performing various methods and processes for performing graph equation modeling according to some embodiments.

## DESCRIPTION OF EMBODIMENTS

The embodiments discussed in the present disclosure are related to methods and systems for performing graph equation modeling for mathematical equation decomposition and an automated code generation in a computing device. More specifically, embodiments described herein are directed to systems and methods for decomposing a mathematical equation that is input. The equation is decomposed into a graph structure, which may then be used for mathematical modeling, and in some instances, may then be used by different computer solvers to find solutions to the given input equation. As may be understood, using graph modeling, it is possible to model various features of the equation efficiently and effectively. In addition, the systems described herein provide a platform to interpret and describe a variety of different mathematical equations.

The proposed systems herein aim to provide a solution to various mathematical problems based on a relatively simplified user input, such as text, mathematical equation, or other data. Using this user input, the system and methods described herein are able to automatically produce a source-code corresponding to the user's input definition, which is then capable of being utilized by a computer solver, such as a digital annealer, to find a solution. Hence, in at least one embodiment described herein, an embedded hardware device is provided which is capable of automatically generating source code based on a mathematical equation input. In other embodiments, this automatically generated source code is then used by a computing device to find a solution to the mathematical equation which was input.

FIG. 1 is a block diagram illustrating an example of a system 100 which may perform the various aspects of the invention. The system 100 may include, for an example, a user device 110 including a user interface 105, such as those described more fully below, which may be used by a user of the system 100 to input a mathematical equation as a user input. The user device 110 is connected to a network 150, which can be any type of network capable of connecting multiple computing devices together for communication between the devices, such as a local-area network (LAN), a wide-area network (WAN), the Internet, or the like.

The network 150 may be configured to communicatively couple the user device 110, an equation processor 180, and a problem solver 170. In some embodiments, network 150 may be any network or configuration of networks configured to send and receive communications between devices. In some embodiments, network 150 may include a conventional type network, a wired or wireless network, and may have numerous different configurations. Furthermore, network 150 may include a local area network (LAN), a wide area network (WAN) (e.g., the Internet), or other interconnected data paths across which multiple devices and/or entities may communicate. In some embodiments, network 150 may include a peer-to-peer network. Network 150 may also be coupled to or may include portions of a telecommunications network for sending data in a variety of different communication protocols. In some embodiments, network 150 may include Bluetooth® communication networks or cellular communication networks for sending and receiving communications and/or data including via short message service (SMS), multimedia messaging service (MMS), hypertext transfer protocol (HTTP), direct data connection, wireless application protocol (WAP), e-mail, etc. Network 150 may also include a mobile data network that may include third-generation (3G), fourth-generation (4G), long-term evolution (LTE), long-term evolution advanced (LTE-A), Voice-over-LTE ("VoLTE") or any other mobile data network or combination of mobile data networks. Further, network 150 may include one or more IEEE 802.11 wireless networks.

The system also includes an equation processor 180 comprising a computing device which is also connected to the network 150 and which is configured to send and receive communications with other computing devices connected to the network 150, including the user device 110 and the problem solver 170. The equation processor 180 is configured to receive the mathematical equation input by the user via the user interface 105 and, as described below, perform a variety of processes on the mathematical equation in order to make the mathematical equation more suitable for solving by a computing device, such as, for example, the problem solver 170. In this example, the equation processor 180 is shown as including an equation autodetection module 120, a problem modeling module 130, and an autonomous code generation module 130, although it should be understood that the equation processor 180 may include additional components or that the modules 120, 130, and 140 described therein may be combined and performed by a single processor specifically configured to perform the various processes described herein. Furthermore, although the equation processor 180 is shown as a separate component than the problem solver 170 in Figure 1, it should be understood that they could be implemented as a single computing device.

The problem solver 170 may be any number of computing devices which are specifically designed to have the processing power and general capacity to solve problems. Examples of problem solvers 170 which may be used in association with the present invention include, for example, a digital annealer simulator, a Fujitsu® Digital Annealer, a D-Wave Solver, or any other solvers including cloud computing-based solvers.

In some embodiments, any one of the user device 110, problem solver 170, and equation processor 180, may include any configuration of hardware, such as servers and databases that are networked together and configured to perform a task. For example, the estimation system 110 may include multiple computing systems, such as multiple servers, that are networked together and configured to perform operations as described in this disclosure and may include computer-readable-instructions that are configured to be executed by one or more devices to perform operations described in this disclosure.

Additionally, modifications, additions, or omissions may be made to FIG. 1 without departing from the scope of the present disclosure. For example, the system 100 may include more or fewer elements than those illustrated and described in the present disclosure.

Figure 2 a flowchart of an example method 200 for receiving a user input of a mathematical equation and automatically producing a computer source-code, according to at least one embodiment described in the present disclosure. The method 200 may be performed by any suitable system, apparatus, or device, such as the system 100 described in Figure 1. For example, as is described more fully below, one or more operations of the method 200 may be performed by one or more elements of the equation processor 180 of FIG.1, the equation processor 180 in association with the problem solver 170, or multiples of the equation processor and/or problem solver of FIG.1. Although illustrated with discrete blocks, the steps and operations associated with one or more of the blocks of the method 200 may be divided into additional blocks, combined into fewer blocks, or eliminated, depending on the particular implementation.

The method 200 may begin at block 210, where a user input of a mathematical equation is received. As is described more fully below, at block 220, the mathematical equation is converted into an equation graph. At block 230, the equation graph is used to automatically generate computer code corresponding to the inputted mathematical equation 230. In some embodiments, the automatically generated computer code may then be sent at block 240 to a problem solver. At block 250, a solution to the mathematical equation may then be received by the problem solver, and at block 260, the solution may be forwarded to the user via the user interface.

Modifications, additions, or omissions may be made to the method 200 without departing from the scope of the present disclosure. For example, the operations of method 200 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments.

Figure 3 illustrates a user interface 300 which may be used by a user in to input the mathematical equation. In this example, the user is able to use the field 310 to enter a mathematical equation into the user interface 300 by inputting the mathematical equation as text or using a known equation format, such as LaTex®, which is an example of a known mathematical equation editor which is often used for formatting mathematical equations for use in online or other computing environments.

As is described more fully below, the equation processor 180 is then able to receive the mathematical equation input by the user and perform a variety of automatic operations. In the example shown in Figure 3, this may include performing a predicted type of problem detection operation, the results of which are shown as a "Knapsack Problem" 330, with a corresponding image 340. An automatically detected required input 350 may also be shown. In some embodiments, the user may correct the predicted type of problem if the automatically detected type of problem is incorrect.

Upon the user selection of a "run" button 320, the equation processor 180 may perform autonomous code generation to output the computer code 400 shown in Figure 4A. The user may then also upload data to satisfy the detected required input fields using the interface 404. It should be noted that the user may manually input data for the required input fields when the amount of required data is small, whereas they may elect to upload a larger dataset as necessary. In some instances, the user may then select a run button 402 to output the solution 450 shown in Figure 4B.

Some embodiments described herein utilize a LaTex® interface. As may be understood, one advantage of such configurations is that it provides a system and method which is capable of processing a large number of mathematical problems. For example, a large process download or dump of different problems may be obtained from a website such as Wikipedia®, scientific journals, or the like. Then, using the automated computer-code generation processes described herein, powerful computer solvers may then be used to solve the various problems. As may be understood, this provides efficient and accurate solutions to an extensive array of problems, benefiting users of said websites and also better utilizing the computer solvers.

Embodiments described herein provide a simple interface which may be used both by novice users and more advanced users so as to enable them to more efficiently obtain computer code which corresponds to an inputted mathematical equation, but also which assists them in obtaining more efficient and accurate solutions to those equations. Although in the example described above a LaTex® interface is described, it should be understood that other inputting formats may be used such as natural language based descriptions (i.e., English description or Japanese description). Some advantages of the LaTex® interface is that it proves a simple input and output interface that is generally known and understood by those of skill in the art, along with enabling a user to define both objective and constraints along with given data. It should be understood, however, that additional options for user input may be used in association with the LaTex® interface or other interfaces. For example, natural language understanding (NLU) may be utilized and or other complex input means may be used, such as Pyomo®, A Mathematical Programming Language (AMPL), or the like, which enable a user to define a problem according to their unique requirements.

Further, the user interface 110 may include a variety of different inputting mechanisms, including an editor, integrated development environments, a notebook, and a visualization tool. In order to interpret the inputted mathematical equations, it should be noted that a variety of different tools may be used as a component of or in association with the problem solver 170, including a source-code generator, complex language model understanding, a LaTex® interpreter, a NLU module, Software mapping from Software as a Service (SaaS) to a Digital Annealer or other solving computer, and a means for performing high-speed file transfer. The problem solver 170 may include an AMPL, Pyomo, PyQUBO, and/or D-Wave Ocean. The problem solver 170 may also include a PyQUBO Connector, a D-Wave connector, and in some instances the problem solver 170 may include a Digital Annealer Simulation, a Digital Annealer Solver, and/or a D-Wave Solver or any cloud computing based solver.

Returning now to the user interface 110, embodiments described herein allow a user to define a mathematical problem using mixed natural language, such as, for example, English, and a known formation such as LaTex®. Conversely, a user who is more savvy may elect to use a LaTex® only notation. Also, a user may upload their own equation using a Tex file or using MPS or in an LP format.

Returning to Figure 2, the method 200 includes receiving a user input of a mathematical equation and converting the mathematical equation into an equation graph. Figure 5 illustrates that the block 220 may include a variety of different sub-processes.

Figure 5 a flowchart of an example method 500 for converting the user inputted mathematical equation into an equation graph, according to at least one embodiment described in the present disclosure. The method 500 may be performed by any suitable system, apparatus, or device, such as the system 100 described in Figure 1. For example, as is described more fully below, one or more operations of the method 500 may be performed by one or more elements of the equation processor 180 of FIG.1, the equation processor 180 in association with the problem solver 170, or multiples of the equation processor and/or problem solver of FIG.1. Although illustrated with discrete blocks, the steps and operations associated with one or more of the blocks of the method 500 may be divided into additional blocks, combined into fewer blocks, or eliminated, depending on the particular implementation.

The method 500 may begin at block 510, where a user input of a mathematical equation is received. In some instances, an equation language input may be used to obtain user input so that a user can interactively enter an equation. In one embodiment, the user input experience may be similar to inputting the mathematical equation into a Microsoft Word Equation building tool which is configured to assist in a user in entering a mathematical equation. The equation language input may then be treated as a LaTex® input and in some instances a visual definition of the inputted mathematical equation may be displayed to the user. In some instances, the inputted mathematical equation may be displayed using Javascript. Also, the mathematical equation may be inputted as a text string value comprising LaTex® input which defines the equation.

In some instances, a list of template equations may be provided to a user so as to enable the user to customize the input of the equation.

Returning to Figure 5, at block 520, preprocessing may be performed in the inputted mathematical equation. In some instances, this preprocessing may include clearing empty lines and spaces from the inputted mathematical equation, clearing reserved keywords and simplifying some types of mathematical expressions. Additionally, the inputted mathematical equation may be converted into a uniform definition. For example, the equation processor 180 may combine different users' input comprising "st," "Subject to," "Subject TO," "subject TO" may all be converted into the unified definition of "s.t." Similarly, "Maximize," and "maximize" may be converted into "Max," and the like. It should be understood that as additional users utilize the system, in some instances, machine learning may be used to observe different input types and to improve the uniformity. Further, in some instances unnecessary or superfluous information, such as a "quad" input, may be removed.

At block 520, the mathematical equation is tokenized. In some instances, the string values are tokenized by splitting lines and segmenting each line. During this process, each token may be considered as one segment of given input. In this instance, the output of the tokenizer is a chain of tokens where each token is a node and vertexes which form a connection between tokens.

Figure 6 a flowchart of an example method 600 for performing a line tokenizer process, according to at least one embodiment described in the present disclosure. The method 600 may be performed by any suitable system, apparatus, or device, such as the system 100 described in Figure 1. For example, as is described more fully below, one or more operations of the method 600 may be performed by one or more elements of the equation processor 180 of FIG.1, the equation processor 180 in association with the problem solver 170, or multiples of the equation processor and/or problem solver of FIG.1. Although illustrated with discrete blocks, the steps and operations associated with one or more of the blocks of the method 600 may be divided into additional blocks, combined into fewer blocks, or eliminated, depending on the particular implementation.

At block 610, a line tokenizing process is performed. During this process, the line tokenizer may consider terms '\n,' '\t\n,' '//' as separators to split the input into an array of tokens where each item is a single line of input. At block 620, a token combining process may be performed. In this instance, split lines of the inputted mathematical equation may be needed to be connected to previous tokens in order for proper notation to be achieved. For example, a user may have incorrectly or inadvertently pressed enter and consequently create split tokens. Alternatively, in some instances a mathematical equation inputted using LaTex®, which has erroneously added additional lines. Figure 7 illustrates an example 700 where different parts of one token have been split into multiple tokens and the required connection which would be required to output them as a single token.

At block 630, a parenthesis tokenizing process is performed. In this process, each segment is decomposed according to identified parenthesis. For example, Figure 8 illustrates an example decomposition of a mathematical equation including multiple parenthesis into multiple token segments. In some embodiments, the Natural Language Toolkit (NLTK) may be used to tokenize the parenthesis for the given equation. Then in some embodiments, it tokenize the whole equation. In addition to tokenizing parenthesis, the tokenization process may also include tokenizing Curly braces, and as is described more fully below, the correlation between tokens so that the tokens and related tokens may be preserved may be performed during the equation graph creation process.

Modifications, additions, or omissions may be made to the methods 500 and 600 without departing from the scope of the present disclosure. For example, the operations of methods 500 and 600 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the disclosed embodiments.

Returning to Figure 5, the method 500 also includes block 540, where each part of the tokens outputted at block 530 are decomposed using a segment parser. In some instances, some tokens may be combined to create a chain of tokens. For example, a "subject to," or "s.t." limitation may be split from a summation where it can be combined and then it may be mapped onto the next object. The output of the parsing is a chain token where each chain token contains all the relevant tokens. Figure 9 is an example 900 is a chain token which may be generated during the segment parsing process.

Figure 10 is a block diagram illustrating an abstract module which may be used for generation of computer-code. In the diagram shown in Figure 10, a parsed equation 1010, such as the output of the methods described above is inputted into the problem modeler, such as the problem modeling module 130 shown in Figure 1. In the example shown in Figure 10, the problem modeling module 130 is a Pyomo Model Module. As is shown in Figure 10, the Pyomo model construction may include analyzing the parsed equation to identify and extract any objection functions, constraints, constants, sums, variables, sets, and parameters. Then, once these components are identified, they may be used to generate a graph equation which may then be converted using the specific commands and language which are unique to each computing language to generate the requested programming code. For example, in the example shown in Figure 10, Pyomo specific objective function, constraint definition, constants, sum functions, variables, set definitions, and parameters may be defined using the unique Pyomo code definitions and functionality. Then Pyomo code may be generated which corresponds the mathematical equation originally inputted by the user. This Pyomo code may then be submitted as a Pyomo Model to a problem solver in order to output a solution.

Figure 10 illustrates that a constraint mining process may be performed as a component of converting the mathematical equation into an equation graph. During this process, given constraint ranges and types are allocated to an extracted variable. This may involve adding additional computer code into the previously generated code in order to further define variables. Figure 11 illustrates an example 1100 of how the ranges of a binary variable may be defined in a resulting computer code 1150.

Figure 12 illustrates an example 1200 of how the problem modeling module 130 may receive a series of tokens and perform a series of extraction steps in order to decompose the tokens and identify a list 1205 of required inputs which should be given or defined by the user in order to create a model which may be converted into computing code. Figures 13A and 13B illustrate examples of how the parameters and variables of an equation 1300 may be extracted into 1305.

Figure 14 illustrates an example of how a summation equation 1400 may be decomposed into a series of connected nodes 1450 which represent the various extracted tokens. Figure 15 illustrates how an equation 1500 may be described as an equation graph 1550.

It may be necessary to process a vector. In such instances, terms may be used to represent vector representation as is shown in Figure 16.

Returning to Figure 2, the process of converting the mathematical equation into the equation graph may also include decomposing the equation and extracting objects once the equation has been parsed and tokenized. More specifically, the equation graph describes the connection between the extracted objects or how the two extracted objects are relevant to each other. It should be understood that once an object is extracted it is added to the equation graph.

In some instances, the problems modeling module 130 may also perform an input symbol extraction process. During this process, an input may be analyzed to produce a list of variables ($V_S$) from summation $\sum_I^F T$ *T* that includes a finite set (*F*) and a term (*T*). In addition, the symbols are extracted from constants and variables to produce ($V_C$). The symbols from constraints may be extracted to produce ($V_L$). Consequently, the final list of input symbols which require input from the user can be listed as follows:

$$V = V_S - V_C - V_L ,$$

wherein V represents symbols which have been extracted from summation forms but which do not appear in the definition, and which are required to be given by the user.

As may be understood, in order to create a model in a specific computer language, such as Pyomo, a user may either produce a concrete module by providing the system with all the data it would require to produce the model, or conversely, an abstract model may be created by first developing the model and then supplying data after the abstract model has been generated. One benefit of generating the abstract model is that there is no requirement to provide all the required data during the development of the model. Further, since the model is decoupled from the data, it is possible to find a similar abstract model so that a database of existing template abstracts may be generated, stored, and easily retrieved for future uses.

Once a model in a specific language is generated based on a specific computer language, it may be necessary to ensure that models which are generated in other computer languages produce equivalent structures and solutions. For example, once the equation graph is generated, it is important to ensure that the automatically generated computer code corresponding in a first language, PyQUBO for example, specifically designed for use in a Digital Annealing Solver, corresponds to and would result in the same solution which would be generated using another solver, such as, for example Pyomo, which may be used with other solvers, such as CPLEX, GUROBI, and the like. In order to ensure the appropriate continuity, each time an object of the inputted equation is modified or a necessary input is modified, the model and equation graph is updated so as to correspond with the current structure.

Figure 17 is a flow chart illustrating various steps of some of the embodiments described herein as automated generated code 1740 is generated based on a mathematical equation 1700 inputted by the user. As is shown in Figure 17, based on the user input 1700, the mathematical equation is parsed and tokenized to output a series of tokens 1710 corresponding to the mathematical equation. The tokens 1710 are further decomposed and extracted to obtain the output 1720, which corresponds to an equation graph, as is described in, for example, block 230 of Figure 2. Based on the equation graph, automated code 2240 is printed and presented to the user according to the command shown in 1730.

As was previously described, in some instances the equation graph may be used to generate an abstract model, which requires further input to define variables in order to obtain a solution. Figure 18 illustrates that the additional input 1810 may be added to the generated code in order to further define and limit the equation graph and update the model from the abstract to a more concrete model 1820, which is then provided to a problem solver 170 to obtain the solution 1850.

As was previously described, one advantage of the embodiments described herein is the ability to generate codes from updated equation, which allows a user to customize the code. The technology can be described as low-code environment when it allows a citizen developer to design and develop different application without writing a code. Therefore, users such as non-technical developers are able to define a problem and the automation code generator produce source-code that can be executed on different solvers including quantum annealing computers and other similar solver machines.

FIG. 19 illustrates an example system 1900, according to at least one embodiment described herein. System 1900 may include any suitable system, apparatus, or device configured to test software. System 1900 may include a processor 1910, a memory 1920, a data storage 1930, and a communication device 1940, which all may be communicatively coupled. Data storage 1930 may include various types of data, such as author objects and social media account objects.

Generally, processor 1910 may include any suitable special-purpose or general-purpose computer, computing entity, or processing device including various computer hardware or software modules and may be configured to execute instructions stored on any applicable computer-readable storage media. For example, processor 1910 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data.

Although illustrated as a single processor in FIG. 19, it is understood that processor 1910 may include any number of processors distributed across any number of network or physical locations that are configured to perform individually or collectively any number of operations described herein. In some embodiments, processor 1910 may interpret and/or execute program instructions and/or process data stored in memory 1920, data storage 1930, or memory 1920 and data storage 1930. In some embodiments, processor 1910 may fetch program instructions from data storage 1930 and load the program instructions into memory 1920.

After the program instructions are loaded into memory 1920, processor 1910 may execute the program instructions, such as instructions to perform flow 200, flow 500, flow 600, method 200, method 500, and method 600 as described herein. For example, processor 1910 may retrieve or receive the mathematical equation as user input and automatically generate computer code corresponding to the mathematical equation. Processor 1910 may also execute the computer code to find a solution to the mathematical equation and to cause the solution to be presented to the user via a user interface.

Memory 1920 and data storage 1930 may include computer-readable storage media or one or more computer-readable storage mediums for carrying or having computer-executable instructions or data structures stored thereon. Such computer-readable storage media may be any available media that may be accessed by a general-purpose or special-purpose computer, such as processor 1910.

By way of example, and not limitation, such computer-readable storage media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause processor 1910 to perform a certain operation or group of operations.

Communication unit 1940 may include any component, device, system, or combination thereof that is configured to transmit or receive information over a network. In some embodiments, communication unit 1940 may communicate with other devices at other locations, the same location, or even other components within the same system. For example, communication unit 1940 may include a modem, a network card (wireless or wired), an infrared communication device, a wireless communication device (such as an antenna), and/or chipset (such as a Bluetooth device, an 802.6 device (e.g., Metropolitan Area Network (MAN)), a WiFi device, a WiMax device, cellular communication facilities, etc.), and/or the like. The communication unit 1940 may permit data to be exchanged with a network and/or any other devices or systems described in the present disclosure. For example, the communication unit 1940 may allow system 1900 to communicate with other systems, such as the problem solver 170 and the user device 110 of FIG. 1.

Modifications, additions, or omissions may be made to system 1900 without departing from the scope of the present disclosure. For example, the data storage 1930 may be multiple different storage mediums located in multiple locations and accessed by processor 1910 through a network.

As indicated above, the embodiments described herein may include the use of a special purpose or general purpose computer (e.g., processor 1910 of FIG. 19) including various computer hardware or software modules, as discussed in greater detail below. Further, as indicated above, embodiments described herein may be implemented using computer-readable media (e.g., memory 1920 or data storage 1930 of FIG. 19) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In the present disclosure, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the invention and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

**1.** A method of performing graph equation modeling, the method comprising:

receiving an input of a mathematical equation from a user via a user interface;
using a processor, performing processing on the input of the mathematical equation to decompose the mathematical equation into a plurality of tokens to generate an equation graph corresponding to the mathematical equation;
generating computer code in a user-specified computing language based on the equation graph; and
causing the computer code to be presented to the user via the user interface, the computer code corresponding to the inputted mathematical equation defined in a computing environment.

**2.** The method of claim 1, further comprising:

sending the computer code to a computing device configured to be a problem solver;
receiving a solution to the mathematical equation from the problem solver based on the computer code; and
causing the solution to the mathematical equation to be presented to the user via the user interface.

**3.** The method of claim 2, wherein the problem solver is a Digital Annealer, a Digital Annealer Simulator, a Quantum Annealer, or a D-Wave Solver.

**4.** The method of claim 1, wherein the user input is received in a natural language format in the user interface.

**5.** The method of claim 1, wherein the user input is received as an equation input in the user interface and the method further comprises converting the input into a LaTex format.

**6.** The method of claim 1, wherein the equation graph comprises a chain of tokens where each token is a node and vertexes of the equation graph correlate with a connection between tokens.

**7.** The method of claim 1, further comprising:

requesting required user input from the user via the user interface;

receiving the required user input from the user via the user interface;
generating an abstract model of the mathematical equation based on the equation graph, the abstract model including a plurality of the required user input; and
performing additional processing on the required user input and updating the equation graph based on the required user input.

**8.** The method of claim 7, further comprising:

sending the computer code to a computing device configured to be a problem solver;
receiving a solution to the mathematical equation from the problem solver based on the computer code; and
causing the solution to the mathematical equation code to be presented to the user via the user interface.

**9.** A non-transitory computer-readable medium having encoded therein programming code executable by a processor to perform or control performance of operations comprising:

receiving an input of a mathematical equation from a user via a user interface;
using a processor, performing processing on the input of the mathematical equation to decompose the mathematical equation into a plurality of tokens to generate an equation graph corresponding to the mathematical equation;
generating computer code in a user-specified computing language based on the equation graph; and
causing the generated computer code to be presented to the user via the user interface, the computer code corresponding to the inputted mathematical equation defined in a computing environment.

**10.** The non-transitory computer-readable medium of claim 9, the operations further comprising:

sending the computer code to a computing device configured to be a problem solver;
receiving a solution to the mathematical equation from the problem solver based on the computer code; and
causing the solution to the mathematical equation to be presented to the user via the user interface.

**11.** The non-transitory computer-readable medium of claim 10, wherein the problem solver is a Digital Annealer, a Digital Annealer Simulator, a Quantum Annealer, or a D-Wave Solver.

**12.** The non-transitory computer-readable medium of claim 9, wherein the user input is received in a natural language input format in the user interface.

**13.** The non-transitory computer-readable medium of claim 9, wherein the user input is received as an equation input in the user interface and the method further comprises converting the input into a LaTex format.

**14.** The non-transitory computer-readable medium of claim 9, wherein the equation graph comprises a chain of tokens where each token is a node and vertexes of the equation graph correlate with the connection between tokens.

**15.** The non-transitory computer-readable medium of claim 9, the operations further comprising:

generating an abstract model of the mathematical equation based on the equation graph, the abstract model including a plurality of required user input;
requesting the required user input from the user via the user interface;
receiving required user input from the user via the user interface; and
performing additional processing on the required user input and updating the equation graph based on the received required user input.

**16.** A system of performing graph equation modeling, the system comprising:
one or more processors configured to:

receive an input of a mathematical equation from a user via a user interface;
perform processing on the input of the mathematical equation to decompose the mathematical equation into a plurality of tokens to generate an equation graph corresponding to the mathematical equation;
generate computer code in a user-specified computing language based on the equation graph; and
cause the computer code to be presented to the user via the user interface, the computer code corresponding to the inputted mathematical equation defined in a computing environment.

**17.** The system of claim 16, the one or more processors being further configured to:

send the automatically generated computer code to a computing device configured to be a problem solver;
receive a solution to the mathematical equation from the problem solver based on the automatically generated computer code; and
cause the solution to the mathematical equation to be presented to the user via the user interface.

**18.** The system of claim 17, wherein the problem solver is a Digital Annealer, a Digital Annealer Simulator, a Quantum Annealer, or a D-Wave Solver.

**19.** The system of claim 16, wherein the processor is further configured to:

receive an input of a mathematical equation from a user via a user interface;
use a processor, performing processing on the input of the mathematical equation to decompose the mathematical equation into a plurality of tokens to generate an equation graph corresponding to the mathematical equation;
generate computer code in a user-specified computing language based on the equation graph; and
cause the computer code to be presented to the user via the user interface, the computer code corresponding to the inputted mathematical equation defined in a computing environment.

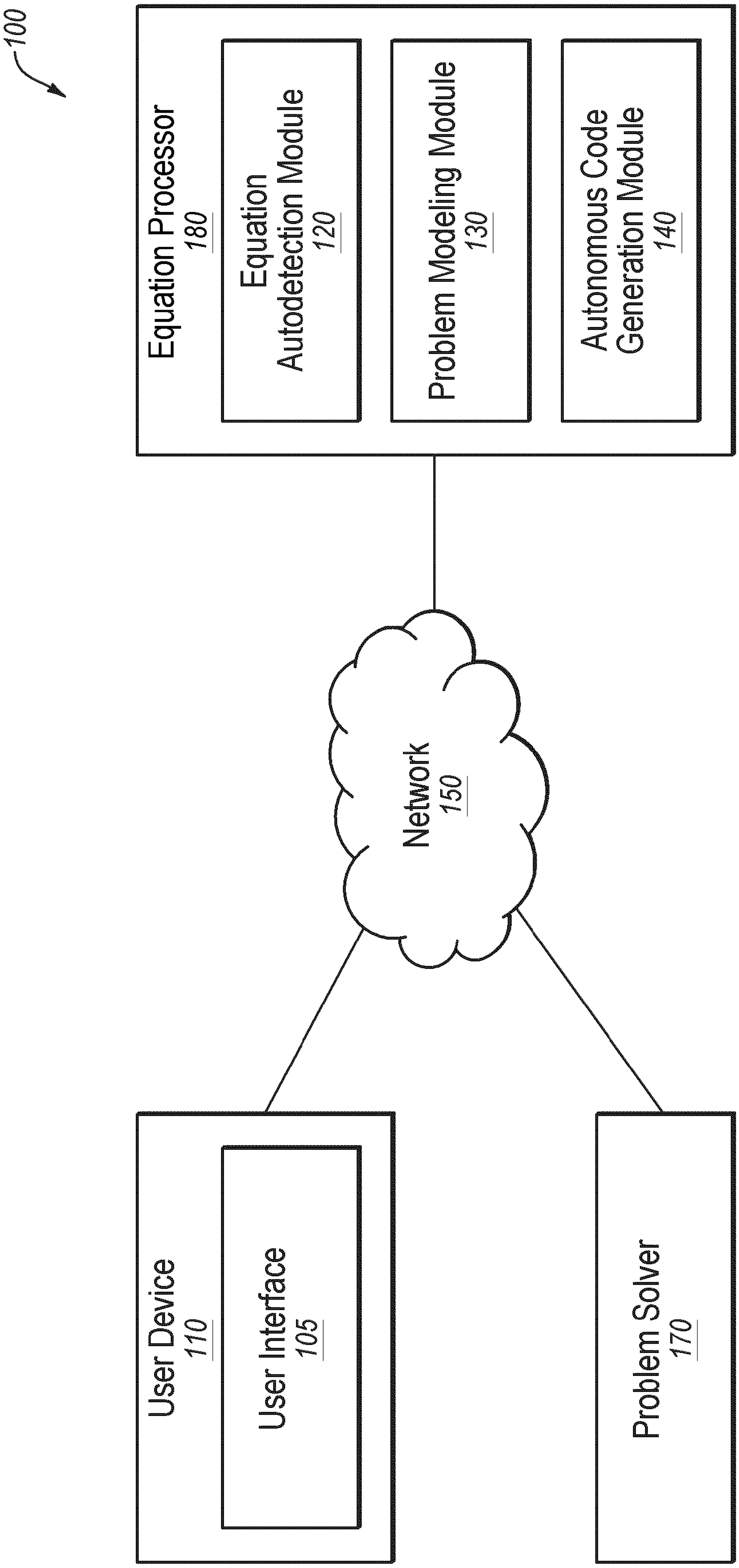
100
Equation Processor
180
Equation
Autodetection Module
120
Problem Modeling Module
130
Autonomous Code
Generation Module
140
Network
150
User Device
110
User Interface
105
Problem Solver
170

FIG. 1

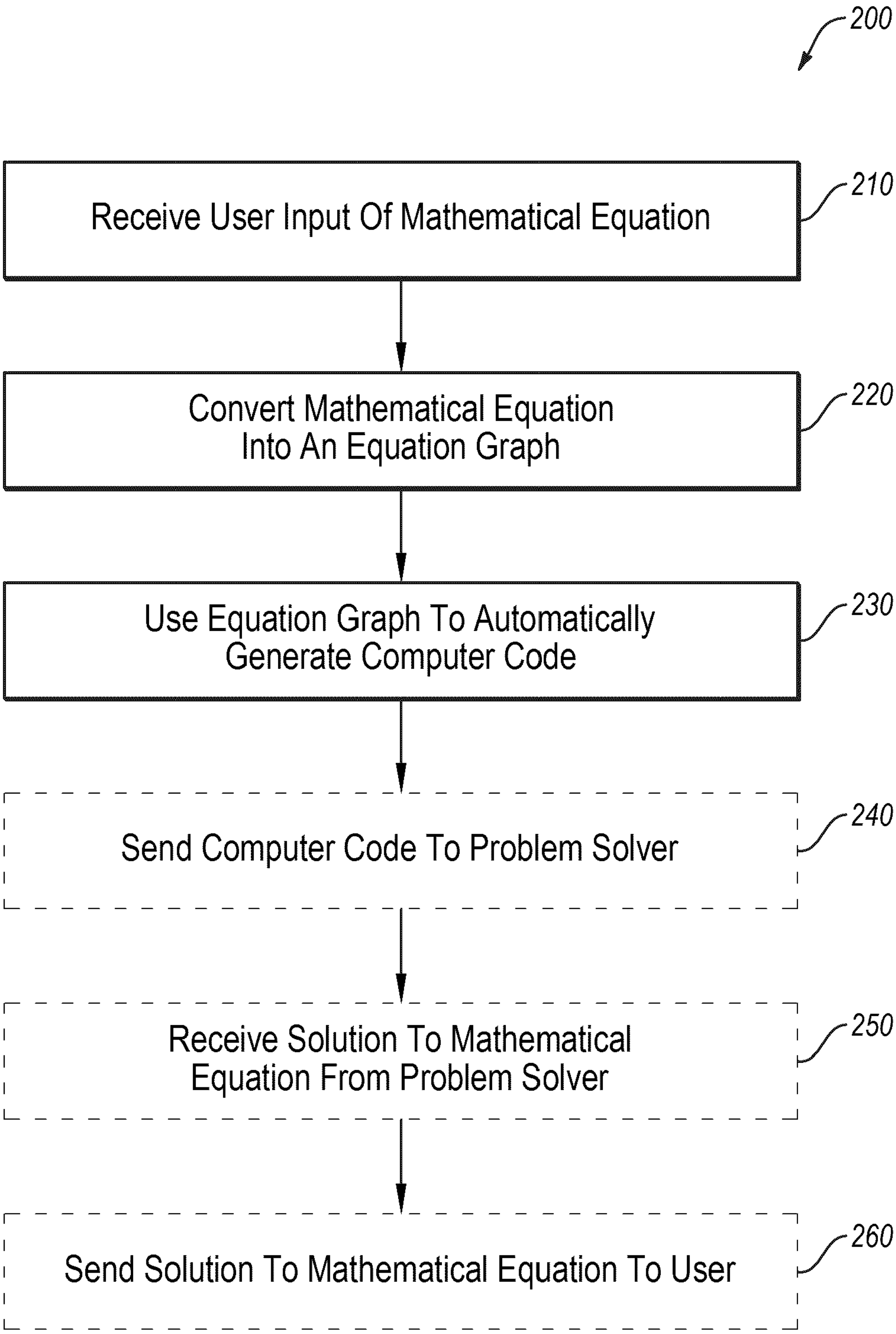
200
Receive User Input Of Mathematical Equation
210
Convert Mathematical Equation Into An Equation Graph
220
Use Equation Graph To Automatically Generate Computer Code
230
Send Computer Code To Problem Solver
240
Receive Solution To Mathematical Equation From Problem Solver
250
Send Solution To Mathematical Equation To User
260

FIG. 2

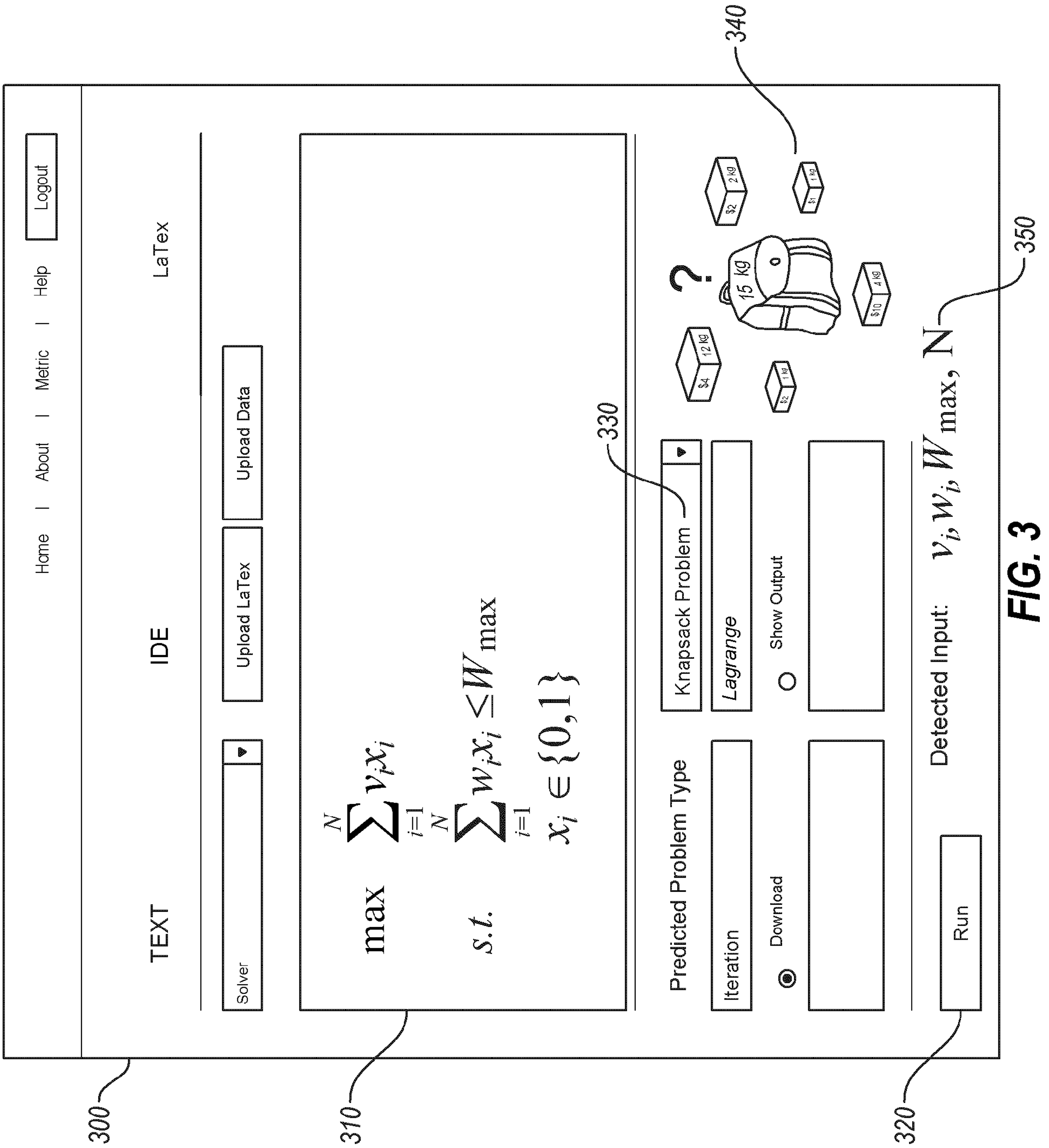
300
310
320
330
340
350
Home | About | Metric | Help
Logout
TEXT
IDE
LaTex
Solver
Upload LaTex
Upload Data
$\max \sum_{i=1}^{N} v_i x_i$
$s.t. \sum_{i=1}^{N} w_i x_i \leq W_{\max}$
$x_i \in \{0,1\}$
Predicted Problem Type
Knapsack Problem
Iteration
Lagrange
Download
Show Output
Run
Detected Input: $v_i, w_i, W_{\max}, N$
?
15 kg

FIG. 3

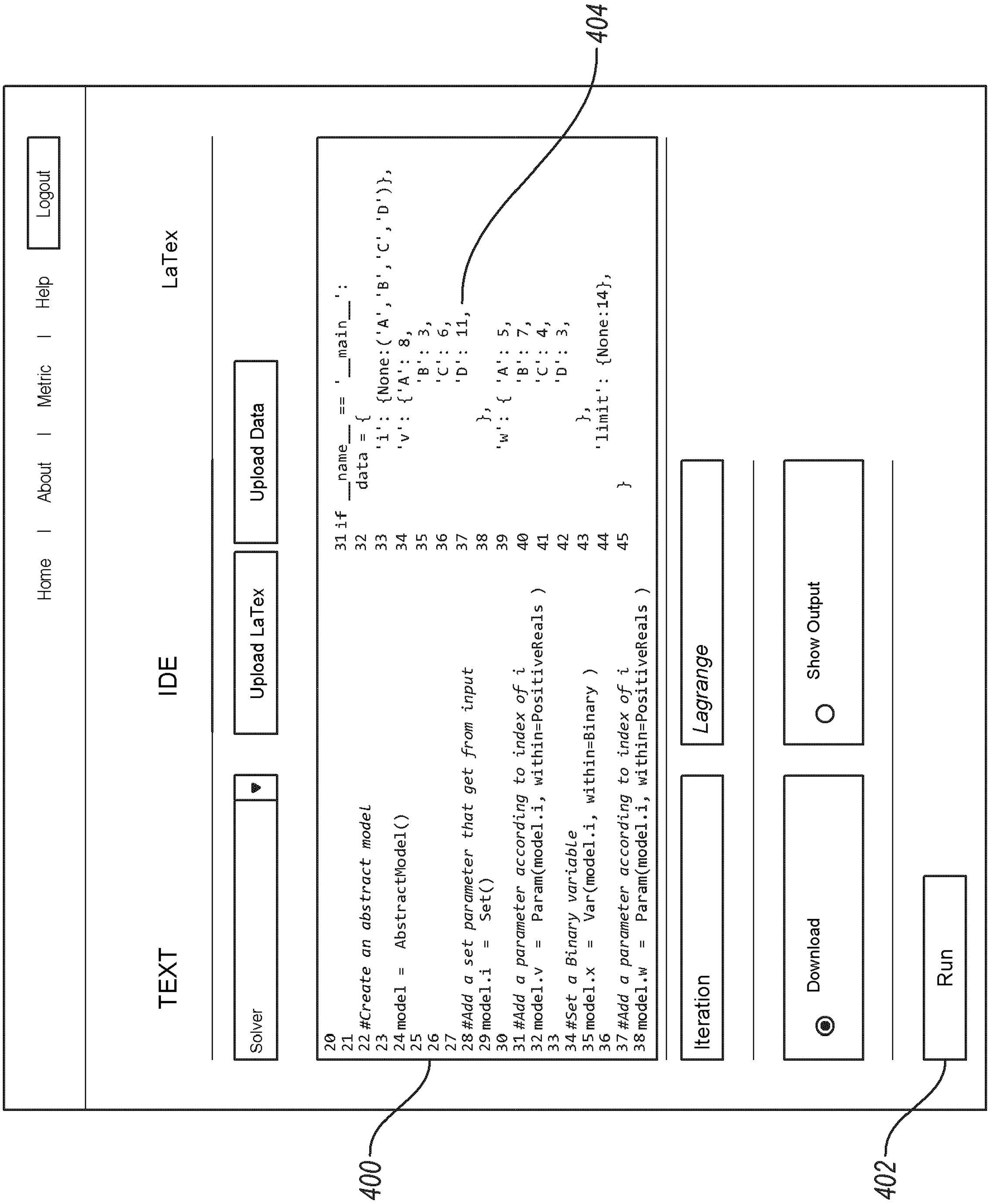
Home | About | Metric | Help
Logout
TEXT
IDE
LaTex
Solver
Upload LaTex
Upload Data
20
21
22 #Create an abstract model
23
24 model = AbstractModel()
25
26
27
28 #Add a set parameter that get from input
29 model.i = Set()
30
31 #Add a parameter according to index of i
32 model.v = Param(model.i, within=PositiveReals )
33
34 #Set a Binary variable
35 model.x = Var(model.i, within=Binary )
36
37 #Add a parameter according to index of i
38 model.w = Param(model.i, within=PositiveReals )
31 if __name__ == '__main__':
32 data = {
33 'i': {None:('A','B','C','D')},
34 'v': {'A': 8,
35 'B': 3,
36 'C': 6,
37 'D': 11,
38 },
39 'w': { 'A': 5,
40 'B': 7,
41 'C': 4,
42 'D': 3,
43 },
44 'limit': {None:14},
45 }
Iteration
Lagrange
Download
Show Output
Run
400
402
404

FIG. 4A

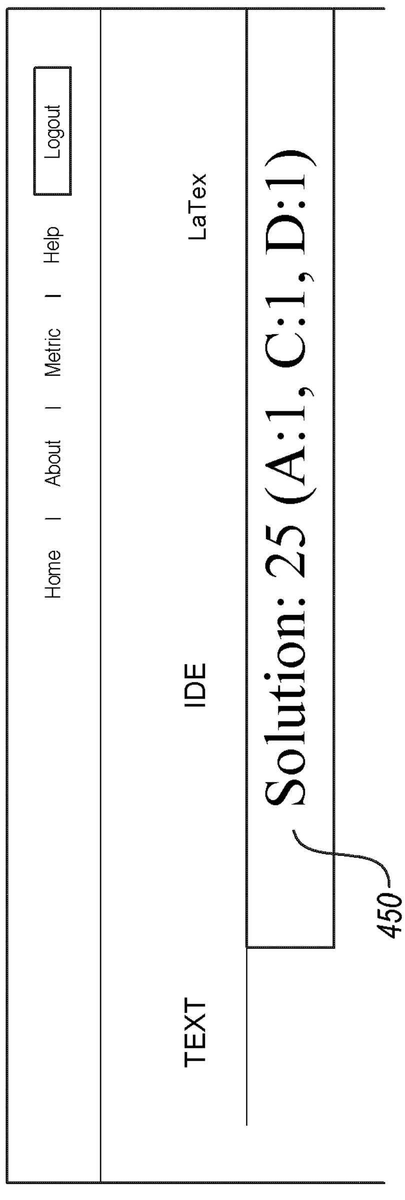
Home | About | Metric | Help
Logout
TEXT
IDE
LaTex
Solution: 25 (A:1, C:1, D:1)
450

FIG. 4B

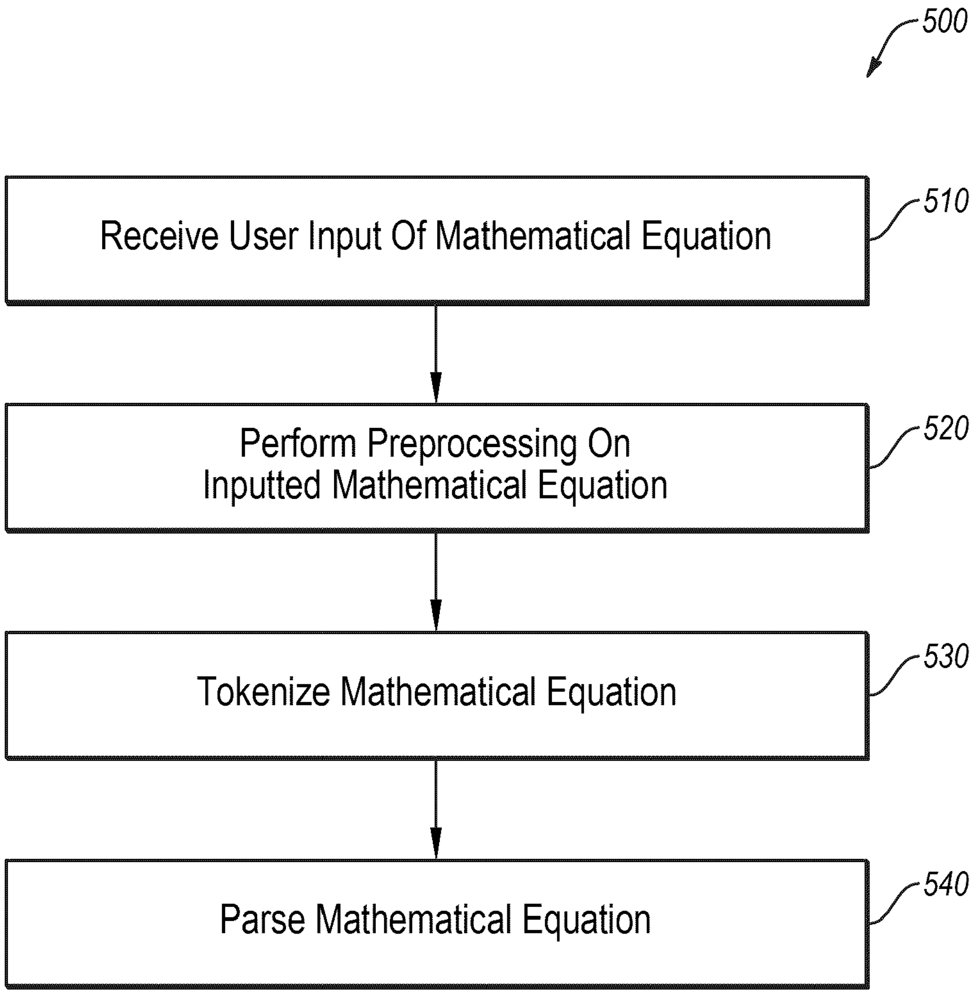
500
Receive User Input Of Mathematical Equation
510
Perform Preprocessing On
Inputted Mathematical Equation
520
Tokenize Mathematical Equation
530
Parse Mathematical Equation
540

FIG. 5

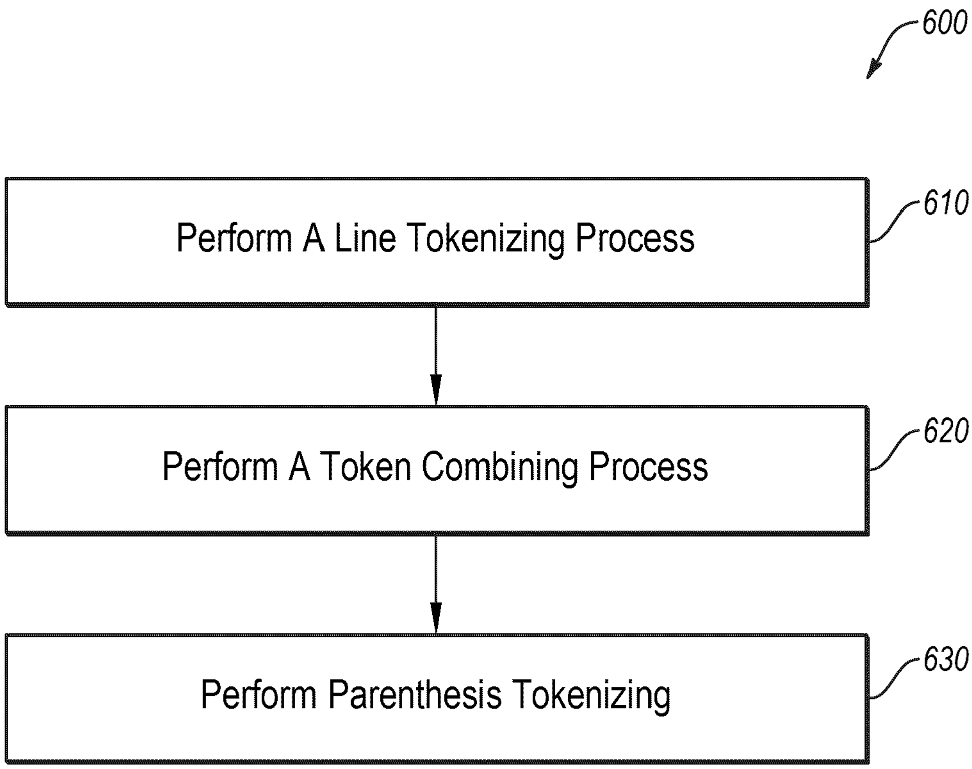
600
Perform A Line Tokenizing Process
610
Perform A Token Combining Process
620
Perform Parenthesis Tokenizing
630

FIG. 6

700

```
eq_tokenizer(equation)

<_sre.SRE_Match object; span=(44, 45), match='('>
1-['Sx-By', '\\min_{2x-2}', '\\sum_{i=l}^n', '-v_i', 'x_i', '+', 'P']
2 ['5x-8y', '\\min_{2x-2}', '\\sum_{i=l}^n', '-v_i', 'x_i', '+', 'P']
<_sre.SRE_Match object; span=(45, 46), match='('>
2 ['5x-8y', '\\min_{2x-2}', '\\sum_{i=l}^n', '-v_i', 'x_i', '+', 'P']
<_sre.SRE_Match object; span=(66, 67), match=')'>
3 ['5x-8y', '\\min_{2x-2}', '\\sum_{i=l}^n', '-v_i', 'x_i', '+', 'P'] 1
<_sre.SRE_Match object; span=(75, 76), match=')'>
3 ['5x-8y', '\\min_{2x-2}', '\\sum_{i=l}^n', '-v_i', 'x_i', '+', 'P'] 0
4 ['5x-8y', '\\min_{2x-2}', '\\sum_{i=l}^n', '-v_i', 'x_i', '+', 'P'] 0
5 ['5x-8y', '\\min_{2x-2}', '\\sum_{i=l}^n', '-v_i', 'x_i', '+', 'P', '((\\sum_{i=1}^n w_i
x_i) + s - C)'] 0

['5x-8y',
 '\\min_{2x-2}',
 '\\sum_{i=l}^n',
 '-v_i',
 'x_i',
 '+',
 'P',
 '',
 '((\\sum_{i=1}^n w_i x_i) + s - C)^2']
```

FIG. 7

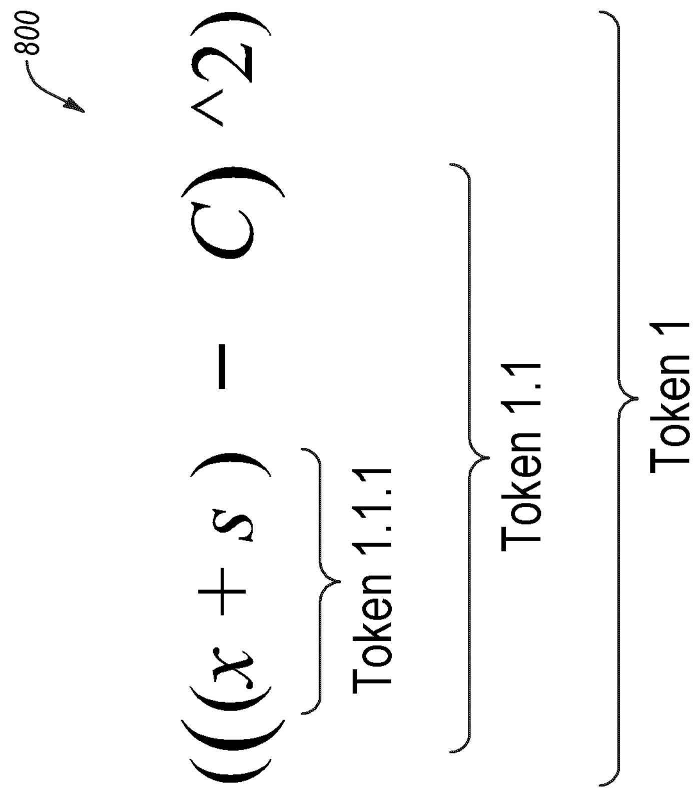


FIG. 8

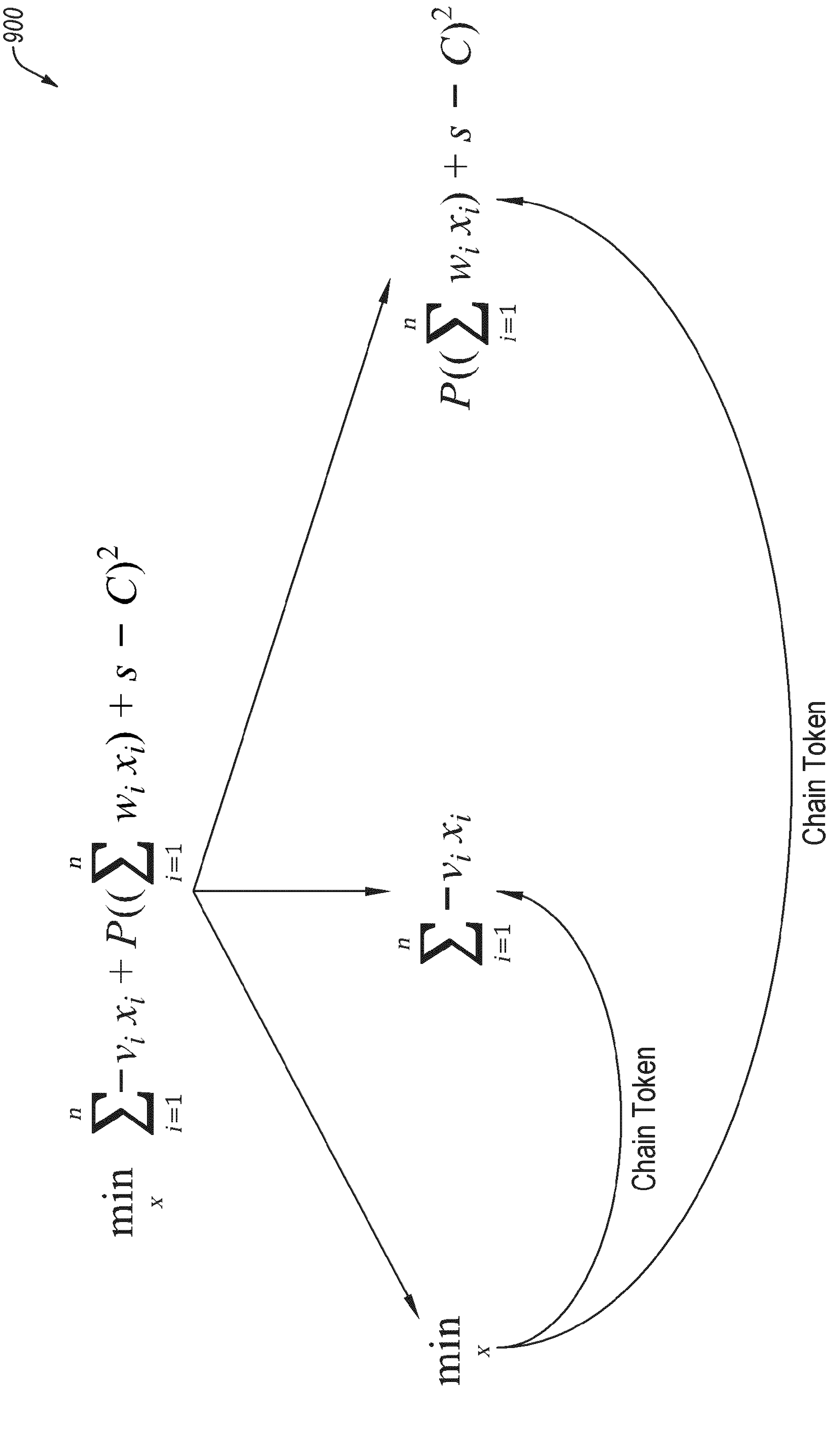
900
$\min_x \sum_{i=1}^{n} -v_i x_i + P((\sum_{i=1}^{n} w_i x_i) + s - C)^2$
$\min_x$
$\sum_{i=1}^{n} -v_i x_i$
$P((\sum_{i=1}^{n} w_i x_i) + s - C)^2$
Chain Token
Chain Token

*FIG. 9*

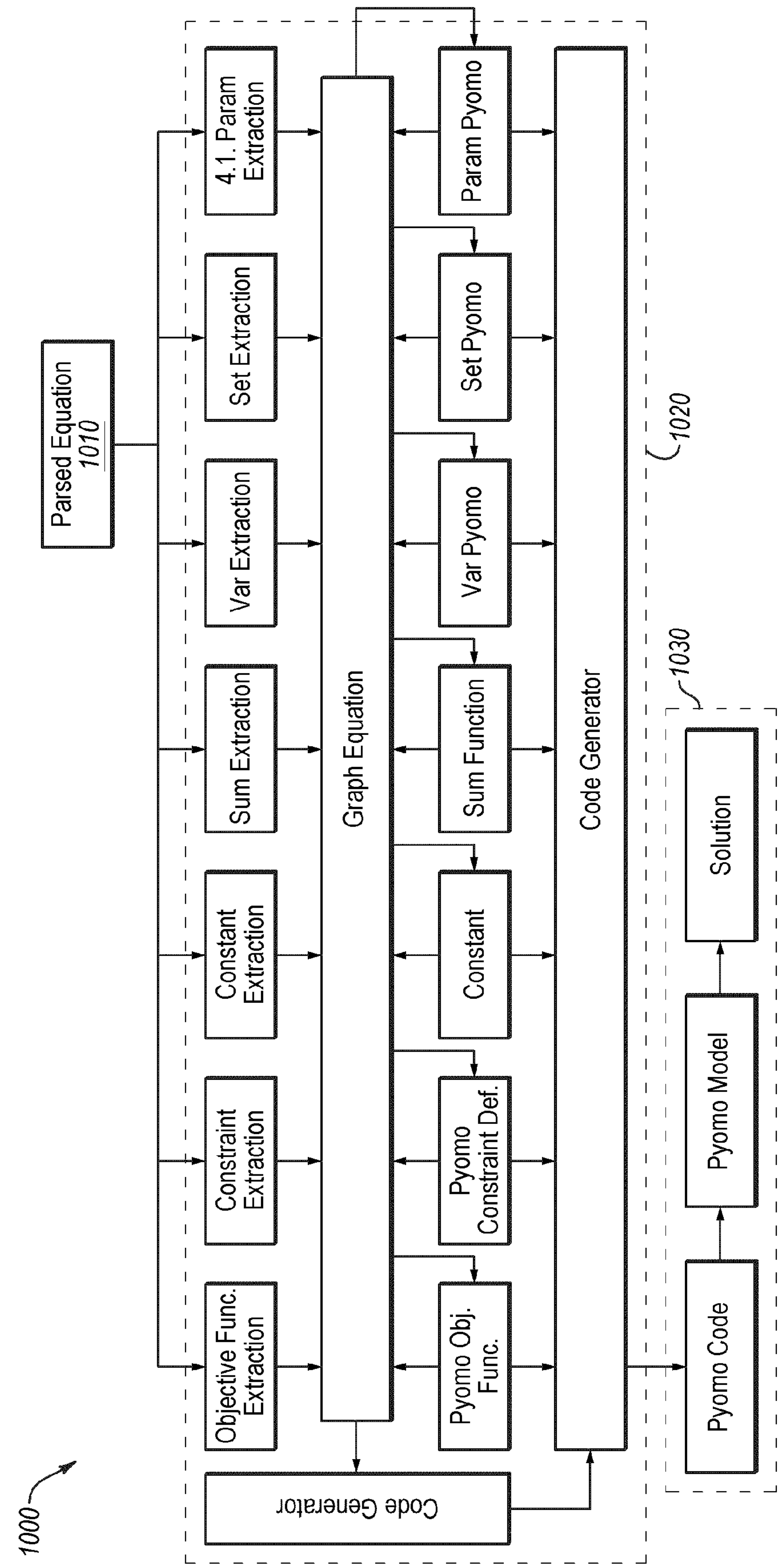
1000
Parsed Equation
1010
4.1. Param Extraction
Set Extraction
Var Extraction
Sum Extraction
Constant Extraction
Constraint Extraction
Objective Func. Extraction
Graph Equation
Param Pyomo
Set Pyomo
Var Pyomo
Sum Function
Constant
Pyomo Constraint Def.
Pyomo Obj. Func.
Code Generator
Code Generator
1020
1030
Solution
Pyomo Model
Pyomo Code

FIG. 10

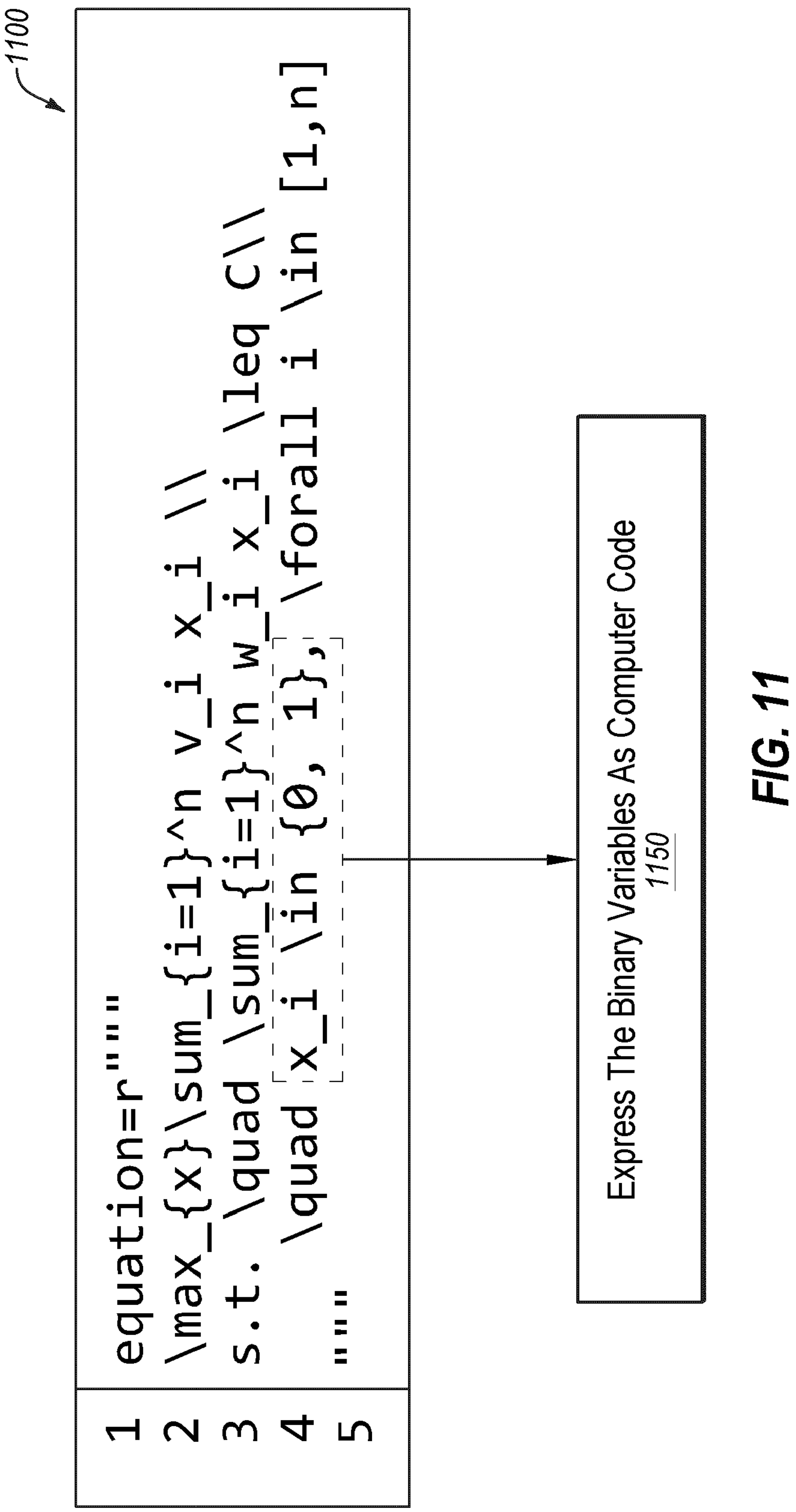
1100
equation=r"""
\max_{x}\sum_{i=1}^n v_i x_i \\
s.t. \quad \sum_{i=1}^n w_i x_i \leq C\\
\quad x_i \in {0, 1}, \forall i \in [1,n]
"""
Express The Binary Variables As Computer Code
1150

FIG. 11

1200

```
tokens=['max sum_{i=1}^m v_i x_i',
        's.t. sum_{i=1}^n w_i x_i = c',
        'x_i in {0, 1},',
        'forall i in [1,n]'
        ]

s=Extract.decompose_sum(tokens)
c=Extract.find_range_parameteres(tokens)
inp=Extract.get_input_vars(s,c)
extract=Extract()
extract.constrain=c
extract.decompose_sum=s
extract.input=inp

print(inp)
m=model(extract)
m.add_param()
 print(m.code)
m.save()
```

1205

```
[('v', 'i'), ('m', None), ('w', 'i'), ('c', None), ('n', None)]
```

FIG. 12

1300

```
equation=r"""
\max_{x}\sum_{i=1}^n v_i x_i \\
s.t. \quad \sum_{i=1}^n w_i x_i \leq C\\
    \quad x_i \in {0, 1}, \forall i \in [1,n]
"""
```

FIG. 13A

1305

```
[{'forall': True,
  'params': [(1, 'digit'), ('n', 'param')],
  'params_type': 'range',
  'var_name': 'i'},
 {'forall': False,
  'parmas': [(0, 'digit'), (1, 'digit')],
  'params_type': 'option',
  'var_name': 'x',
  'var_para_name': 'i'}]
```

FIG. 13B

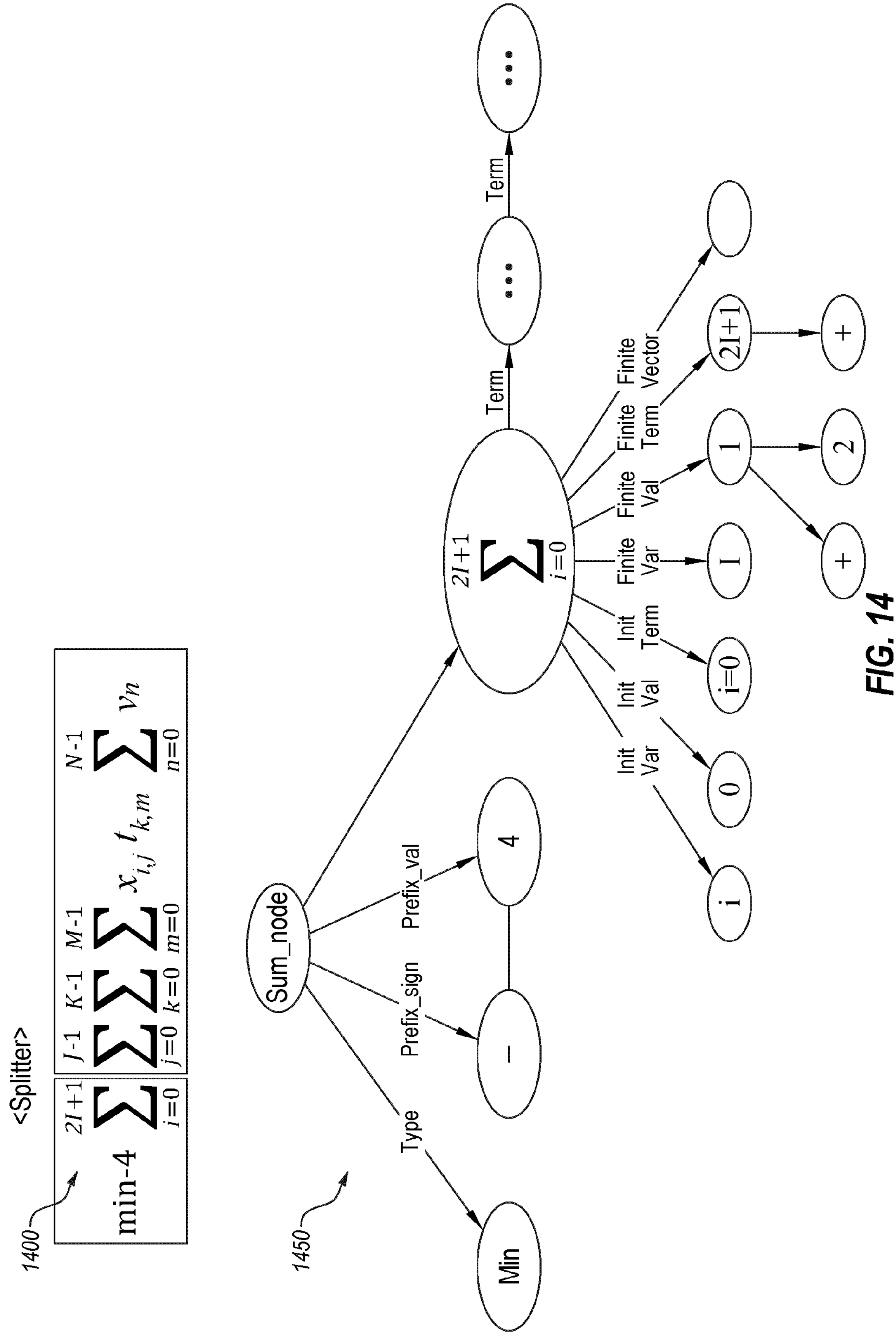

1400
<Splitter>
min-4
1450
Sum_node
Type
Prefix_sign
Prefix_val
Min
–
4
Term
Term
Init Var
Init Val
Init Term
Finite Var
Finite Val
Finite Term
Finite Vector
i
0
i=0
I
1
2I+1
+
2
+


FIG. 14

1500

```
min sum_{k=0}^{N-1} sum_{(i,j) in M}^{} x_i,j x_k
s.t. sum_{k=0}^{N-1} x_v x_k = 1
forall v in V
```

1550

```
OrderedDict([('init_var', 'k'),
             ('init_val', '0'),
             ('init_vector', []),
             ('finit_var',
              OrderedDict([('pre_sign', ''),
                           ('pre_val', ''),
                           ('var'. 'N'),
                           ('post_sign', '-'),
                           ('post_val', '1')])),
             ('finit_val', None),
             ('finit_term', 'N-1'),
             ('term',
              OrderedDict([('init_var', None),
                           ('init_val', None),
                           ('init_vector', [{'M': ('i', 'j')}]),
                           ('finit_var', None),
                           ('finit_val', None),
                           ('finit_term', ''),
                           ('term', None),
                           ('term_str', None),
                           ('term_type', None),
                           ('splitter', None),
                           ('objective_type', None),
                           ('str', ' sum_ (i,j) in M  x_i,j x_k')])),
             ('term_str', None),
             ('term_type", 'objective'),
             ('splitter', None),
             ('objective_type', None).
             ('str', 'min sum_ k=0 N-1 <SPLIT>')]),
>>>
```

FIG. 15

```
[OrderedDict([('init_var', 'k'),
              ('init_val', '0'),
              ('init_vector', []),
              ('finit_var',
               OrderedDict([('pre_sign', ''),
                            ('pre_val', ''),
                            ('var'. 'N'),
                            ('post_sign', '-'),
                            ('post_val', '1')])),
              ('finit_val', None),
              ('finit_term', 'N-1'),
              ('term',
               OrderedDict([('init_var', None),
                            ('init_val', None),
                            ('init_vector', [{'M': ('i', 'j')}]),
                            ('finit_var',
                             {'post_sign': '',
                              'post_val': '',
                              'pre_sign': '',
                              'pre_val': '',
                              'var': 'X'}),
                            ('finit_val', None),
                            ('finit_term', 'X'),
                            ('term', 'x_{i,j} x_k'),
                            ('term_str', None),
                            ('term_type', 'objective'),
                            ('splitter', None),
                            ('objective_type', None),
                            ('str', ' sum_ (i,j) in M X x_{i,j} x
_k')])),
              ('term_str', None),
              ('term_type", 'objective'),
              ('splitter', None),
              ('objective_type', None).
              ('str', 'min sum_ k=0 N-1 <SPLIT>')]),
 OrderedDict([('init_var', 'k'),
              ('init_val', '0'),
              ('init_vector", []),
              ('finit_var',
               OrderedDict([)'pre_sign', ''),
                            ('pre_val', ''),
                            ('var'. 'N'),
                            ('post_sign', '-'),
                            ('post_val', '1')])),
              ('finit_val', None),
              ('finit_term', 'N-1'),
              ('term', 'x_v x_k j = c'),
              ('term_str', None),
              ('term_type', 'constraint'),
              ('splitter', '='),
              ('objective_type', ''),
              ('str', 's.t. sum_ k=0 N-1 x_v x_k j = c')])]
>>>
```

*FIG. 16*

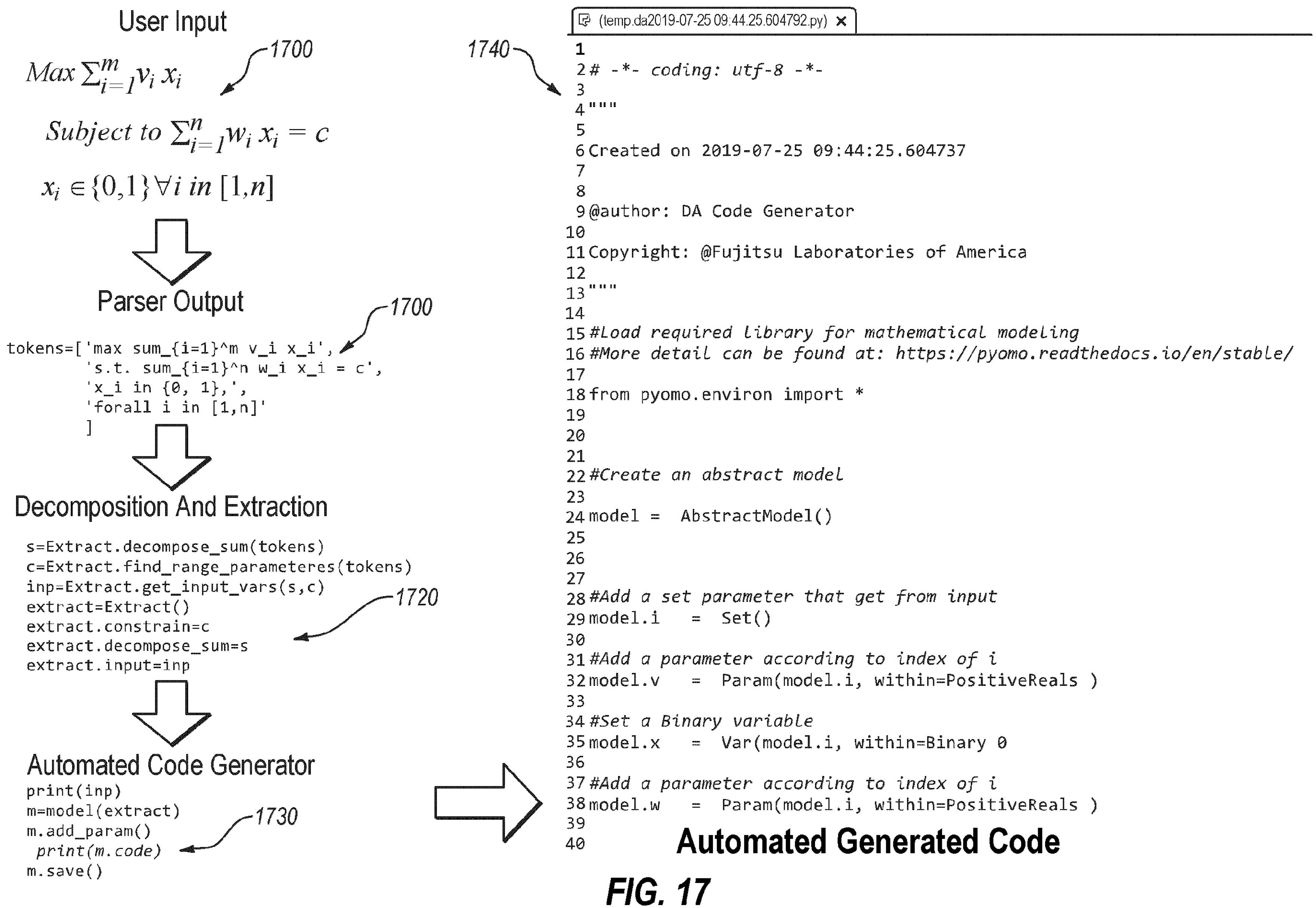
User Input
Max $\sum_{i=1}^{m} v_i x_i$
1700
Subject to $\sum_{i=1}^{n} w_i x_i = c$
$x_i \in \{0,1\} \forall i$ in $[1,n]$
Parser Output
1700
tokens=['max sum_{i=1}^m v_i x_i',
's.t. sum_{i=1}^n w_i x_i = c',
'x_i in {0, 1},',
'forall i in [1,n]'
]
Decomposition And Extraction
s=Extract.decompose_sum(tokens)
c=Extract.find_range_parameteres(tokens)
inp=Extract.get_input_vars(s,c)
extract=Extract()
extract.constrain=c
extract.decompose_sum=s
extract.input=inp
1720
Automated Code Generator
print(inp)
m=model(extract)
m.add_param()
print(m.code)
m.save()
1730
1740
(temp.da2019-07-25 09:44:25.604792.py)
# -*- coding: utf-8 -*-
"""
Created on 2019-07-25 09:44:25.604737
@author: DA Code Generator
Copyright: @Fujitsu Laboratories of America
"""
#Load required library for mathematical modeling
#More detail can be found at: https://pyomo.readthedocs.io/en/stable/
from pyomo.environ import *
#Create an abstract model
model = AbstractModel()
#Add a set parameter that get from input
model.i = Set()
#Add a parameter according to index of i
model.v = Param(model.i, within=PositiveReals )
#Set a Binary variable
model.x = Var(model.i, within=Binary 0
#Add a parameter according to index of i
model.w = Param(model.i, within=PositiveReals )
Automated Generated Code

FIG. 17

1810

```
if __name__ == '__main__':
    data = {
        'i': {None:('A','B','C','D')},
        'v': {'A': 8,
              'B': 3,
              'C': 6,
              'D': 11,
        },
        'w': { 'A': 5,
              'B': 7,
              'C': 4,
              'D': 3,
        },
        'limit': {None:14},
    }
    instance = model.create_instance(data={None:data})
    instance.pprint()
    print('-'*40)
    opt = SolverFactory('glpk')
    sol=opt.solve(instance)
    print(sol.pprint)
```

Input To Generated Code
(Add Summation And Use The Input)

1820

```
    i : Dim=0. Dimen=1, Size=4, Domain=None, Ordered=False, Bounds=None
        ['A', 'B', 'C', 'D']

3 Param Declarations
    limit : Size=1, Index=None, Domain=PositiveReals, Default=None, Mutable=False
        Key  : Value
        None :    14
    v : Size=4, Index=i, Domain=PositiveReals, Default=None, Mutable=False
        Key : Value
          A :     8
          B :     3
          C :     6
          D :    11
    w : Size=4, Index=i, Domain=PositiveReals, Default=None, Mutable=False
        Key : Value
          A :     5
          B :     7
          C :     4
          D :     3

1 Var Declarations
    x : Size-4, Index=i
        Key : Lower : Value : Upper : Fixed : Stale : Domain
          A :     0 :  None :     1 : False :  True : Binary
          B :     0 :  None :     1 : False :  True : Binary
          C :     0 :  None :     1 : False :  True : Binary
          D :     0 :  None :     1 : False :  True : Binary

1 Objective Declarations
    value : Size=1, Index=None, Active=True
        Key  : Active : Sense    : Expression
        None :   True : maximize : 8*x[A] + 3*x[B] + 6*x[C] + 11*x[D]

1 Constraint Declarations
    weight : Size=1, Index=None, Active=True
        Key  : Lower : Body                              : Upper : Active
        None :  -Inf : 5*x[A] + 7*x[B] + 4*x[C] + 3*x[D] :  14.0 :   True

7 Declarations: i v w limit x value weight
```

Model

Solution

```
- - - - - - - - - - - - - - - - - - - - - - - - - - -
<bound method MapContainer.pprint of {'Solution': [OrderedDict([('number of solutions', 0), ('numb
er of solutions displayed', 0)])], 'Problem': [{'Number of constraints': 2, 'Upper bound': 25.0, '
Sense': 'maximize', 'Lower bound': 25.0, 'Name': 'unknown', 'Number of objectives': 1, 'Number of
variables': 5, 'Number of nonzeros': 5}], 'Solver': [{'Status': 'ok', 'Termination condition': 'op
timal', 'Error rc': 0, 'Statistics': {'Branch and bound': {'Number of bounded subproblems': '1',
Number of created subproblems': '1'}}, 'Time': 0.00819253921508789}]}>
```

1850

FIG. 18

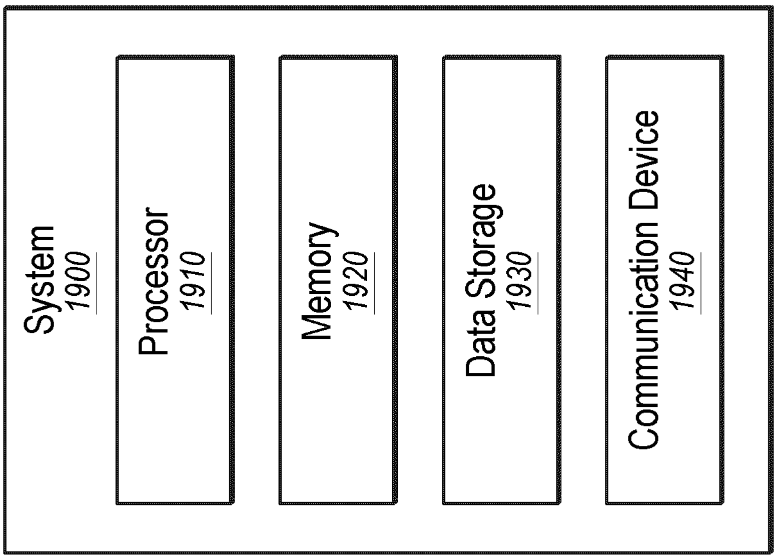
System
1900
Processor
1910
Memory
1920
Data Storage
1930
Communication Device
1940

FIG. 19

Europäisches Patentamt
European Patent Office
Office européen des brevets

# EUROPEAN SEARCH REPORT

Application Number
EP 20 19 9815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Ding Keyu ET AL: "AiFu at SemEval-2019 Task 10: A Symbolic and Sub-symbolic Integrated System for SAT Math Question Answering", Proceedings of the 13th International Workshop on Semantic Evaluation, 6 June 2019 (2019-06-06), pages 900-906, XP055785606, Minneapolis, Minnesota, USA Retrieved from the Internet: URL:https://www.aclweb.org/anthology/S19-2154.pdf [retrieved on 2021-03-15] * the whole document * ----- | 1-19 | INV. G06F40/111 G06F40/137 G06F40/154 G06F40/211 G06F17/11 |
| X | MATSUZAKI TAKUYA ET AL: "Semantic Parsing of Pre-university Math Problems", PROCEEDINGS OF THE 55TH ANNUAL MEETING OF THE ASSOCIATION FOR COMPUTATIONAL LINGUISTICS (VOLUME 1: LONG PAPERS), [Online] 2017, pages 2131-2141, XP055785585, Stroudsburg, PA, USA DOI: 10.18653/v1/P17-1195 Retrieved from the Internet: URL:https://www.aclweb.org/anthology/P17-1195.pdf> [retrieved on 2021-03-15] * the whole document * ----- | 1-19 | TECHNICAL FIELDS SEARCHED (IPC) G06F |

-/--

The present search report has been drawn up for all claims

2

| Place of search | Date of completion of the search | Examiner |
|---|---|---|
| Berlin | 16 March 2021 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 20 19 9815

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU QIANYING ET AL: "Tree-structured Decoding for Solving Math Word Problems", PROCEEDINGS OF THE 2019 CONFERENCE ON EMPIRICAL METHODS IN NATURAL LANGUAGE PROCESSING AND THE 9TH INTERNATIONAL JOINT CONFERENCE ON NATURAL LANGUAGE PROCESSING (EMNLP-IJCNLP), [Online] 3 November 2019 (2019-11-03), pages 2370-2379, XP055785538, Stroudsburg, PA, USA DOI: 10.18653/v1/D19-1241 Retrieved from the Internet: URL:https://www.aclweb.org/anthology/D19-1241.pdf> [retrieved on 2021-03-15] * the whole document * ----- | 1-19 | |
| A | ZELUN WANG ET AL: "Translating Math Formula Images to LaTeX Sequences Using Deep Neural Networks with Sequence-level Training", ARXIV.ORG, CORNELL UNIVERSITY LIBRARY, 201 OLIN LIBRARY CORNELL UNIVERSITY ITHACA, NY 14853, 29 August 2019 (2019-08-29), XP081498281, * abstract * ----- | 5,13 | TECHNICAL FIELDS SEARCHED (IPC) |
| A | KEVIN KOFLER ET AL: "DynGenPar A Dynamic Generalized Parser for Common Mathematical Language", 8 July 2012 (2012-07-08), INTELLIGENT COMPUTER MATHEMATICS, SPRINGER BERLIN HEIDELBERG, BERLIN, HEIDELBERG, PAGE(S) 386 - 401, XP047009047, ISBN: 978-3-642-31373-8 * abstract * ----- | 1,9,16 | |

The present search report has been drawn up for all claims

| Place of search | Date of completion of the search | Examiner |
|---|---|---|
| Berlin | 16 March 2021 | Stauch, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)